# EUROPÄISCHE PATENTSCHRIFT

(11) **EP 2 341 779 B1**
(45) Veröffentlichungstag und Bekanntmachung des Hinweises auf die Patenterteilung: **25.11.2015**
(21) Anmeldenummer: 10720134.5
(22) Anmeldetag: 24.04.2010
(51) Int. Cl.: A22C 25/08, B65B 25/06, B65B 35/36, B25J 15/08, B65G 47/00, B65G 47/82

(54) **VORRICHTUNG UND VERFAHREN ZUM SEPARIEREN VON PRODUKTTEILEN GESCHNITTENER PRODUKTE**
DEVICE AND METHOD FOR SEPARATING PRODUCT PARTS OF CUT PRODUCTS
PROCÉDÉ ET DISPOSITIF DE SÉPARATION DE MORCEAUX DE PRODUITS COUPÉS

(30) Priorität: 28.04.2009 DE 102009018836
(43) Veröffentlichungstag der Anmeldung: 13.07.2011
(73) Patentinhaber: Nordischer Maschinenbau Rud. Baader GmbH + Co. KG, 23560 Lübeck (DE)
(72) Erfinder: PAULSOHN, Carsten, 23568 Lübeck (DE)
(74) Vertreter: Stork Bamberger
(86) Internationale Anmeldenummer: PCT/EP2010/002823
(87) Internationale Veröffentlichungsnummer: WO 2010/124880

(56) Entgegenhaltungen:
- EP-A1- 0 239 547
- EP-A2- 0 534 778
- WO-A2-2007/138616
- WO-A2-2008/058061
- DE-A1- 3 710 479
- GB-A- 2 407 552

## Beschreibung

Die Erfindung betrifft eine Vorrichtung zum Separieren von Produktteilen geschnittener Produkte, insbesondere Fischfilets, umfassend ein Transportelement zum Transportieren der geschnittenen und noch zusammen liegenden Produkte in Transportrichtung T, Mittel zum Querfördern von Produktteilen in Querrichtung Q quer zur Transportrichtung T sowie ein Transportelement zum Abfördern der separierten Produktteile. Des Weiteren betrifft die Erfindung ein entsprecherides Verfahren zum Separieren von Produktteilen geschnittener Produkte.

Solche Vorrichtungen und Verfahren kommen in unterschiedlichen Industriebereichen, insbesondere in der Nahrungsmittelindustrie zum Einsatz. Als Beispiel für einen solchen Einsatz dient die Fischindustrie. Insbesondere in der Weißfischindustrie werden die Fischfilets portioniert. Das bedeutet, dass die Fischfilets, die üblicherweise Schwanz voraus transportiert werden, durch Längs- und/oder Schräg- und/oder Querschnitte in mehrere Produktteile, nämlich einzelne Portionen geschnitten werden. Diese Portionen liegen nach dem Schneiden noch zusammengruppiert auf dem Transportelement und müssen separiert und sortiert werden. Ziel ist es, sortenreine Produktströme zu erzeugen.

Ein Fischfilet wird üblicherweise in den so genannten Loin-, Belly- und Tail-Abschnitt geschnitten. Eine feinere Unterteilung sieht das Schneiden des Fischfilets in den so genannten Long-Loin-, Belly-, Left-over- und Tail-tip-Abschnitt vor. Durch die Längsschnitte in den Fischfilets, also in Transportrichtung T der Fischfilets gerichtete Schnitte, liegen einzelne Produktteile in Transportrichtung nebeneinander. Am Beispiel der Fischfilets liegen z.B. der Loin-Abschnitt und der Belly-Abschnitt nebeneinander. Die Aufzählung bzw. Benennung der Produktteile ist rein beispielhaft und auch nicht auf das genannte Produkt beschränkt. Entsprechendes gilt selbstverständlich auch für andere Produkte der Nahrungsmittelindustrie, wie z.B. Geflügel (hier z.B. Brustfilets), sowie Produkte anderer Industriebereiche, wie z.B. Papier oder dergleichen.

Grundsätzlich sind Vorrichtungen zum Sortieren von Produkten bekannt, wie z.B. das Dokument GB 2 407 552 offenbart. Die DE 94 08 979 U1 beschreibt beispielsweise eine Vorrichtung, die Produktschieber umfasst, wobei die Produktschieber in vertikaler und horizontaler Richtung bewegbar sind. Die Produktschieber dienen zum Schieben einzelner Produkte von einem Transportelement auf einen Speicherbereich oder auf ein anderes Transportelement. Dazu drückt der Produktschieber das Produkt als Ganzes vom Transportelement oder greift vollständig über das Produkt, um es auf ein anderes Transportelement zu ziehen. Viele Produkte, insbesondere feuchte und/oder klebrige Produkte, wie es z.B. Fischfilets sind, eignen sich jedoch gerade nicht zum Schieben. Des Weiteren ist die in der genannten Schrift beschriebene Vorrichtung lediglich dazu geeignet, die Produkte als Ganzes in Querrichtung zu bewegen. Mit anderen Worten kann die Vorrichtung nicht einzelne Produktteile separieren.

Um einzelne Produktteile geschnittener Produkte zu separieren, werden die gewünschten Produktteile bisher manuell vom Transportband abgenommen. Es gibt allerdings auch Möglichkeiten, solche Produkte, also insbesondere auch Fischfilets, die bereits geschnitten wurden, mindestens teilweise maschinell zu separieren und zu sortieren. Dies gilt insbesondere für in Transportrichtung hintereinander liegende Produktteile des Fischfilets. Diese können z.B. über Geschwindigkeitsbänder entzerrt und somit separiert und sortiert werden. Nebeneinander liegende Produktteile, wie z.B. der Loin-Abschnitt oder Long-Loin-Abschnitt, können auf diese Weise aber nicht vereinzelt und sortiert werden.

Der Erfindung liegt daher die Aufgabe zugrunde, eine Vorrichtung zu schaffen, die das automatische und schonende Separieren von in Transportrichtung nebeneinander liegenden Produktteilen gewährleistet.

Diese Aufgabe wird durch die eingangs genannte Vorrichtung gemäß Anspruch 1 dadurch gelöst, dass die Vorrichtung des Weiteren Mittel zum Erkennen der Lage der Produkte auf dem Transportelement sowie zum Erfassen produktspezifischer Daten umfasst und dass das Mittel zum Querfördern mindestens zwei Produktfinger aufweist, die zum Eingriff in Schnittfugen zwischen Produktteilen und zum Aufliegen auf Produktteilen ausgebildet und in Abhängigkeit der Lage der Produkte und der produktspezifischen Daten entsprechend zum Querfördern in Querrichtung Q steuerbar sind. Durch diese erfindungsgemäße Ausbildung wird erreicht, dass nebeneinander liegende Produktteile in Querrichtung vom auf dem Transportelement liegenden Produkt separiert werden können, ohne die anderen Produktteile zu beschädigen oder deren Lage zu verändern, indem die Produktfinger gezielt einzelne Produktteile ansteuern bzw. ergreifen und in Querrichtung Q vom Transportelement bewegen können. Durch die Kenntnis der genauen Produktlage und der individuellen Produktdaten (also insbesondere der geometrischen Daten und/oder Bilddaten) einerseits und das Zusammenwirken der Produktfinger mit den Produktteilen andererseits wird gewährleistet, dass die Produktteile, obwohl sie kontinuierlich gefördert werden, zur Bildung sortenreiner Produkt(teile)ströme (z.B. nur Loin-Abschnitte oder nur Long-Loin-Abschnitte) separiert werden können.

Eine zweckmäßige Weiterbildung der Erfindung zeichnet sich dadurch aus, dass die Produktfinger zum Ziehen der Produktteile in Querrichtung Q quer zur Transportrichtung T ausgebildet und eingerichtet sind. Damit wird sichergestellt, dass auch feuchte und klebrige Produkte bzw. Produktteile vom Transportelement bewegt werden können, ohne die Produktteile zu beschädigen oder in anderer Weise negativ zu beeinflussen.

Vorteilhafterweise sind alle Produktfinger federbelastet ausgebildet. Dadurch, dass der Kraftschluss zwischen den Produktfingern und dem Produkt durch die Federn hergestellt wird, werden die Produkte schonend behandelt.

Eine bevorzugte Ausführungsform der Erfindung ist dadurch gekennzeichnet, dass alle Produktfinger an einem gemeinsamen Träger angeordnet und aus einer Warteposition in eine Arbeitsposition und umgekehrt bewegbar ausgebildet sind und der Träger mindestens einen weiteren Freiheitsgrad zur Ausübung der Querbewegung in Querrichtung Q aufweist. Auf diese Weise wird auf besonders einfache und effektive Weise eine gleichmäßige Querziehbewegung gewährleistet, so dass die vom Transportelement zu ziehenden Produktteile bezüglich ihrer Ausrichtung unverändert bleiben.

Zweckmäßigerweise ist der Träger um eine Achse C, die vertikal zur Transportebene der Produkte verläuft, schwenkbar, derart, dass die am Träger angeordneten Produktfinger in Bezug auf die Transportrichtung T in unterschiedliche Winkelstellungen bringbar sind. Damit können innerhalb der Transportebene unterschiedliche Positionen der Produktfinger zum Produkt bzw. zu den Produktteilen erreicht werden. Bei einem schräg auf dem Transportelement liegenden Produkt können die Produktfinder trotzdem exakt in den Schnittfugen bzw. auf den entsprechenden Produktteilen platziert werden. Des Weiteren können durch die Schwenkbewegung während der Querbewegung unterschiedliche Massenträgheiten der Produktteile, wie es z.B. bei einem Fischfilet mit dem Kopf-und Schwanzbereich der Fall ist, kompensiert werden.

Eine bevorzugte und erfindungsgemäße Ausgestaltung sieht vor, dass die Produktfinger gruppenweise, vorzugsweise jedoch alle einzeln ansteuerbar sind. Dies ermöglicht eine individuelle und schonende Handhabung der Produkte, so dass die Genauigkeit und Zuverlässigkeit bei der Separierung der Produktteile verbessert ist.

Die Aufgabe wird auch durch das eingangs genannte Verfahren gemäß Anspruch 13 gelöst, das durch folgende Schritte gekennzeichnet ist: Zuführen der geschnittenen und noch zusammen liegenden Produkte in Transportrichtung T mittels eines Transportelementes, Erkennen der Lage der Produkte auf dem Transportelement und Erfassen produktspezifischer Daten, Querfördern von Produktteilen in Querrichtung Q quer zur Transportrichtung T, indem mindestens zwei Produktfinger in Schnittfugen zwischen Produktteilen eingreifen und auf Produktteilen aufliegen und in Abhängigkeit der Lage der Produkte und der produktspezifischen Daten entsprechend zum Querfördern in Querrichtung Q gesteuert werden, und Abfördern der separierten Produktteile. Die sich daraus ergebenden Vorteile wurden bereits im Zusammenhang mit der Vorrichtung erläutert. Zur Vermeidung von Wiederholungen wird auf die entsprechenden Passagen verwiesen.

Ein besonders bevorzugtes Verfahren ist dadurch gekennzeichnet, dass die Produktteile vom Transportelement gezogen werden, wobei die Produktfinger während der Ziehbewebung um eine vertikale Achse C geschwenkt werden. Damit wird erreicht, dass insbesondere längere Produktteile mit unterschiedlichen Massenträgheiten, wie es z.B. für den Long-Loin-Abschnitt gilt, möglichst parallel zur Transportrichtung T abgelegt werden, selbst wenn das Produkt schräg auf dem Transportelement liegend transportiert wird.

Weitere zweckmäßige und/oder vorteilhafte Merkmale, Ausgestaltungen und Verfahrensschritte ergeben sich aus den Unteransprüchen und der Beschreibung. Eine besonders bevorzugte Ausführungsform sowie das Verfahrensprinzip werden anhand der beigefügte Zeichnung näher erläutert. In der Zeichnung zeigt:
- Fig. 1: eine Draufsicht auf die erfindungsgemäße Vorrichtung mit Produktfingern, die zum Querfördern des Loin-Abschnitts in eine Schnittfuge zwischen Loin-Abschnitt und Belly-Abschnitt eingreifen, wobei die außerhalb des Loin-Abschnitts liegenden Produktfinger in der Warteposition stehen,
- Fig. 2: eine Draufsicht auf die Vorrichtung mit Produktfingern, die zum Querfordern des Long-Loin-Abschnitts einerseits in eine Schnittfuge zwischen Long-Loin-Abschnitt und Belly-Abschnitt eingreifen und andererseits auf dem Long-Loin-Abschnitt aufliegen,
- Fig. 3: eine Vorderansicht auf die Vorrichtung und
- Fig. 4: ein einzelner Produktfinger, der zur kraftschlüssigen Anlage an Produktteile ausgebildet ist.

Die gezeigte Vorrichtung dient zum Separieren von Produktteilen geschnittener Fischfilets. Selbstverständlich können mit dieser Vorrichtung auch beliebige andere Produkte aus der Nahrungsmittelindustrie und anderen Industriebereichen separiert werden.

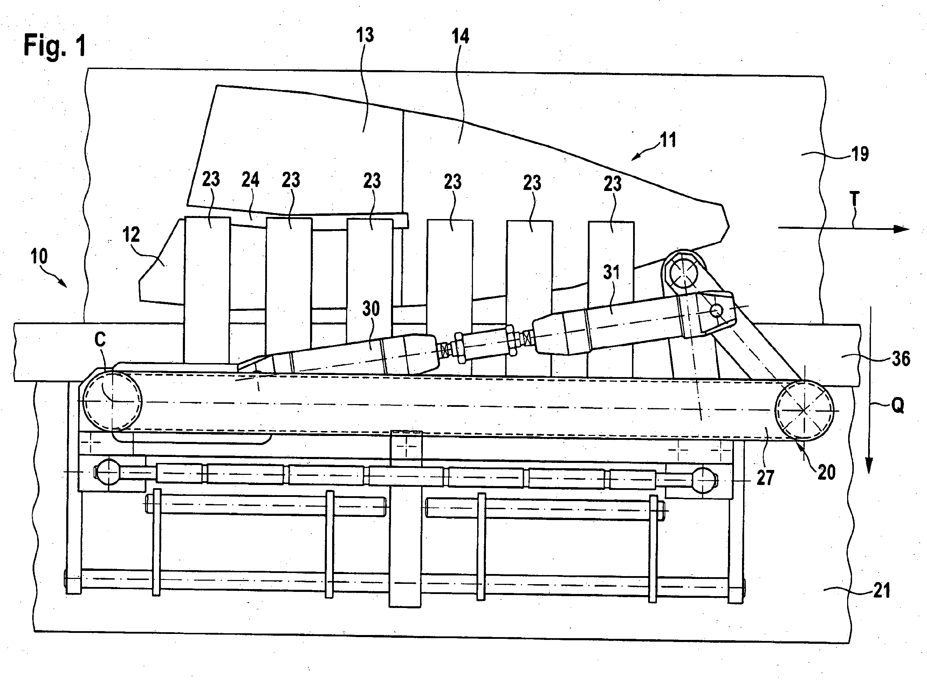

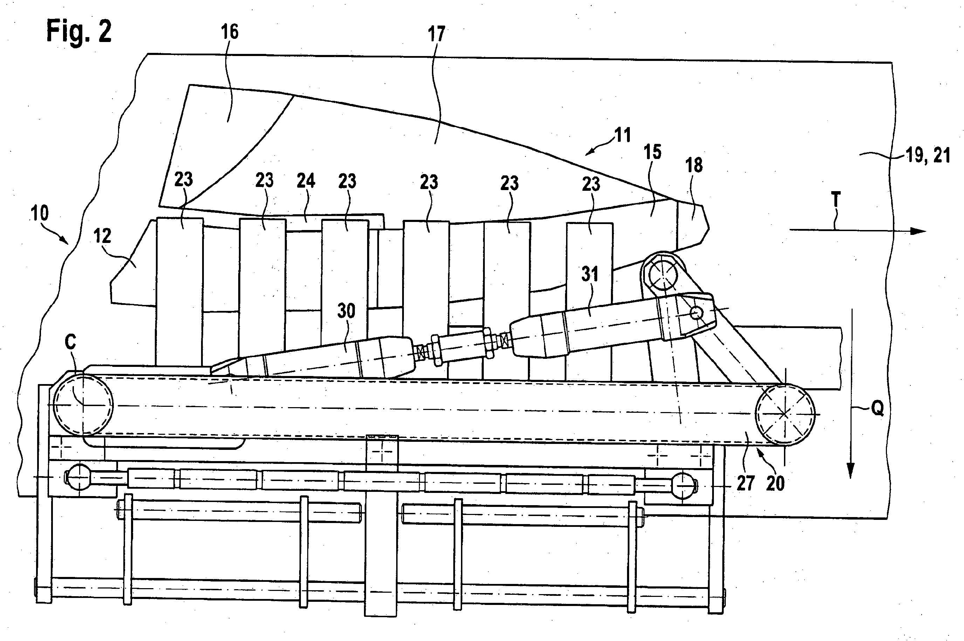

Die in den Figuren dargestellte Vorrichtung 10 dient zum Separieren von Produktteilen geschnittener Produkte 11, beispielsweise Fischfilets. Die einzelnen Produktteile der Fischfilets sind anhand der Figuren 1 und 2 näher beschrieben, wobei die Anzahl und Bezeichnung der Produktteile variieren kann. Ein Fischfilet wird üblicherweise in den Loin-Abschnitt 12, den Belly-Abschnitt 13 und den Tail-Abschnitt 14 (siehe Figur 1) oder den Long-Loin-Abschnitt 15, den Belly-Abschnitt 16, den Left-over-Abschnitt 17 und den Tail-tip-Abschnitt 18 (siehe Figur 2) geschnitten. Diese (oder andere) Produktteile liegen auf einem Transportelement 19 zum Transportieren der geschnittenen und noch zusammen liegenden Produktteile in Transportrichtung T. Das Transportelement 19 kann ein umlaufendes, übliches Saugband sein. Andere Ausbildungen des Transportelementes 19, z.B. als geschlossenes Förderband oder dergleichen, sind aber ebenfalls möglich. Besonders geeignet sind Transportelemente 19 mit einer glatten und rutschfähigen Oberfläche, möglicherweise sogar zur Erreichung einer verbesserten Rutschfähigkeit mit Wasser beaufschlagt. Dem Transportelement 19 ist ein Mittel 20 zum Querfördern von Produktteilen in Querrichtung Q quer zur Transportrichtung T zugeordnet. Des Weiteren umfasst die Vorrichtung 10 ein Transportelement 21 zum Abfördern der separierten Produktteile. Das Transportelement 21 kann identisch mit dem Transportelement 19 sein. Mit anderen Worten ist in einem solchen Fall ein einziges Transportelement für die Zuführung und die Abförderung vorgesehen. Vorzugsweise sind die Transportelemente 19 und 21 aber separate Elemente (siehe hierzu weiter unten).

Erfindungsgemäß umfasst die Vorrichtung 10 weiterhin (nicht dargestellte) Mittel zum Erkennen der Lage der Produkte 11 auf dem Transportelement 19 sowie zum Erfassen produktspezifischer Daten. Alternativ könnte das Mittel auch Bestandteil von der Vorrichtung 10 vorgeordneten Maschinen sein, beispielsweise der Maschine zum Schneiden der Produkte 11. Das Mittel ist vorzugsweise dazu ausgebildet und eingerichtet, Informationen zur Lage der Produkte 11 auf dem Transportelement 19 sowie geometrische Daten und/oder Bildinformationen zum jeweiligen Produkt 11 zu erfassen bzw. zu ermitteln und über geeignete (nicht dargestellte) Steuerungsmittel an das Mittel 20 zum Querfördern weiterzuleiten. Das Mittel 20 zum Querfördern selbst weist mindestens zwei Produktfinger 23 auf, die zum Eingriff in Schnittfugen 24 zwischen Produktteilen und/oder zum Aufliegen auf Produktteilen ausgebildet sind. Die Produktfinger 23 sind dabei in Abhängigkeit der Lage der Produkte 11 und der produktspezifischen Daten zum Querfördern steuerbar. Anders ausgedrückt sind die Produktfinger 23 auf der Basis der durch das entsprechende Mittel erfassten und ermittelten Informationen betätigbar, so dass einzelne Produktteile gezielt vom Produkt 11 separiert und einem gesonderten Produktstrom zugeführt werden können.

Das Mittel 20 zum Querfördern ist vorzugsweise oberhalb des Transportelementes 19 angeordnet, so dass auf die Produkte 11 bzw. Produktteile von oben eingewirkt werden kann. Die Produktfinger 23 sind zum Ziehen der Produktteile in Querrichtung Q quer zur Transportrichtung T ausgebildet und eingerichtet. Dies gilt insbesondere für die auf dem Produktteil aufliegenden Produktfinger 23. Aber selbst die über das zu bewegende Produktteil übergreifenden, in die Schnittfuge 24 eingreifenden Produktfinger 23 üben im Wesentlichen eine Ziehbewegung aus, da die Produktteile in Richtung des Mittels 20 bewegt werden, das die Bewegung auslöst.

Sämtliche Produktfinger 23 sind federbelastet ausgebildet. Das bedeutet, dass die Produktfinger 23 grundsätzlich von Federelementen 25 nach unten in die Arbeitsposition gezogen werden, so dass sie auf den Produktteilen aufliegen bzw. in die Schnittfugen 24 eingreifen. Zur Steuerung bzw. Betätigung der Bewegung der Produktfinger 23 sind diesen jeweils Pneumatikzylinder 26 oder gleich wirkende Elemente zugeordnet, die gegen die Federkraft arbeiten und es ermöglichen, die Produktfinger 23 in die (obere) Warteposition zu bewegen. Die Betätigung der Produktfinger 23 kann aber auch durch andere Betätigungselemente erreicht werden. Es ist denkbar, dass alle Produktfinger 23 synchron durch einen gemeinsamen Mechanismus betätigbar und ansteuerbar sind. Vorzugsweise sind die Produktfinger 23 jedoch gruppenweise und besonders bevorzugt einzeln ansteuerbar. Alle Produktfinger 23, vorzugsweise sind sechs Produktfinger 23 vorgesehen, wobei die Anzahl der Produktfinger 23 selbstverständlich variieren kann, sind an einem gemeinsamen Träger 27 angeordnet. Die an dem Träger 27 gelagerten Produktfinger 23 sind aus einer (oberen) Warteposition in eine (untere) Arbeitsposition und umgekehrt bewegbar ausgebildet, und zwar mittels der genannten Federelemente 25 einerseits und der Pneumatikzylinder 26 anderseits. Wie erwähnt kann die Bewegung der Produktfinger 23 auch auf andere übliche Weise, z.B. durch Stell- oder Schrittmotoren oder dergleichen realisiert werden. Vorzugsweise sind die Produktfinger 23 schwenkbar um eine Achse B am Träger 27 gelagert. Der Träger 27 weist mindestens einen weiteren Freiheitsgrad zur Ausübung der Querbewegung in Querrichtung Q auf. Anders ausgedrückt ist der Träger 27 wahlweise mindestens um eine weitere Achse schwenkbar und/oder entlang von mindestens einer weiteren Achse linear bewegbar. Bevorzugt ist der Träger 27 um eine Achse A, die oberhalb der Transportebene E liegt und in Richtung der Transportrichtung T verläuft, schwenkbar. Dazu ist der Träger 27 an einer Art Schwinge 28 angeordnet, und zwar an dem der Achse A entgegen gesetzten, freien Ende 29 der Schwinge 28. Die Schwinge 28 kann z.B. ein Hebel oder dergleichen sein. Andere Ausführungsformen der Schwinge 28 sind aber ebenfalls möglich. Die Schwenkbewegung ist vorzugsweise durch gesteuerte Antriebselemente, wie z.B. einen Stellmotor oder Schrittmotor ausführbar. Andere Antriebselemente können aber ebenfalls eingesetzt werden. Anstelle der Schwenkbewegungen der Produktfinger 23 und der Schwinge 28 können die Bewegungen auch durch lineare Antriebsmittel, überlagerte Bewegungen oder auf andere übliche Weise realisiert sein.

In einer weiteren erfindungsgemäßen Ausführungsform kann der Träger 27 einen weiteren Freiheitsgrad aufweisen. Beispielsweise kann der Träger 27 um eine Achse C, die vertikal zur Transportebene E der Produkte 11 verläuft, schwenkbar sein, derart dass die Produktfinger 23 in Bezug auf die Transportrichtung innerhalb der Transportebene E in unterschiedliche Winkelstellungen bringbar ist. Dazu ist der Träger 27 dreh- bzw. schwenkbar am freien Ende 29 der Schwinge 28 gelagert. Ausgehend von der Ursprungsstellung, in der der Träger 27 im Wesentlichen parallel zum Transportelement 19 bzw. zur Transportrichtung T ausgerichtet ist, kann z.B. durch einen Pneumatikzylinder 30 eine erste Stufe der Schwenkmöglichkeit um die Achse C geschaffen werden. Durch einen weiteren Pneumatikzylinder 31 kann eine weitere Schwenkmöglichkeit erzeugt Werden. Die Schwenkbewegung ist ausgehend von der Ursprungsstellung in beide Richtungen um die Achse C möglich. Die Schwenkbewegung des Trägers 27 kann aber auch stufenlos verstellbar ausgebildet sein.

Sämtliche Produktfinger 23 können gleich ausgebildet sein. Bevorzugt ist jedoch eine an die Produktgeometrie und/oder Lage und Zusammenstellung der einzelnem. Produktteile zueinander und/oder Ausbildung der Schnittfugen 24 angepasste Ausbildung der Produktfinger 23. So können einzelne oder mehrere Produktfinger 23 zur Herstellung eines (überwiegenden) Formschlusses ausgebildet sein, während andere Produktfinger 23 zur Herstellung eines (überwiegenden) Kraftschlusses ausgebildet sind. Wie weiter oben bereits erwähnt, üben alle Produktfinger 23 durch die Federelemente 25 ein gewisses Maß an Kraftschluss auf die Produkte 11 aus, was bei glatten Produkten 11, wie es die Fischfilets darstellen, allerdings zu vernachlässigen ist.

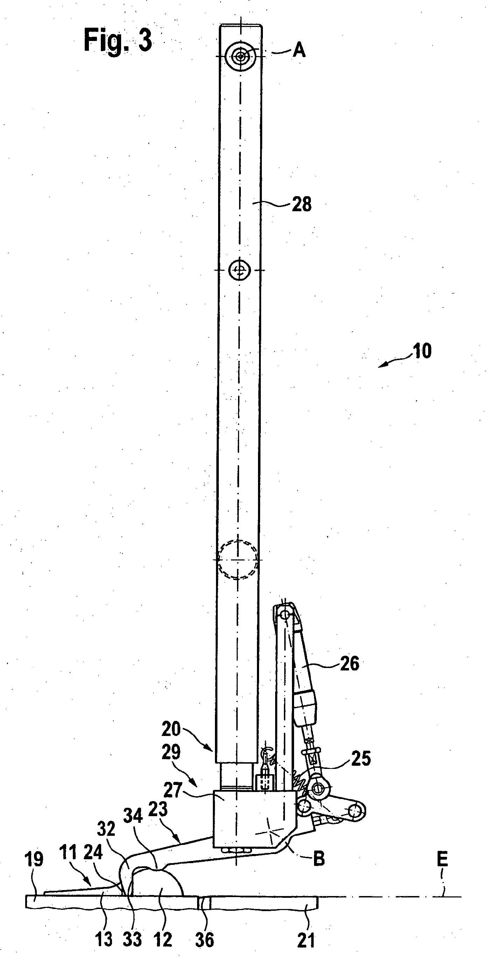

In der in den Figuren beschriebenen Ausführungsform sind drei Produktfinger 23 zur Herstellung des Formschlusses mit dem Produkt 11 mit einer Hakenform versehen (siehe z.B. Figur 3). Diese Hakenform eignet sich besonders gut zum Eingriff der Produktfinger 23 in die Schnittfugen 24 zwischen den Produktteilen, wobei die Schnittfuge 24 zwischen dem Loin-Abschnitt 12 und dem Belly-Abschnitt 13 wegen des so genannten Pinboneschnitts besonders breit ausgebildet ist. Der den Formschluss herstellende Haken 32 der Produktfinger 23 weist eine Kante 33, die so genannten Ziehkante, zur Anlage an dem quer zu bewegenden Produktteil auf. Mit dieser Kante 33 greift der Produktfinger 23 in die Schnittfuge 24. Des Weiteren weist der Produktfinger 23 auf der der Oberseite der Produktteile zugewandten Seite ein Halteelement 34 auf, das gleichzeitig als eine Art Niederhalter fungiert. Selbstverständlich kann die Ausbildung der Produktfinger 23 zur Herstellung des Formschlusses in anderer Weise realisiert sein.

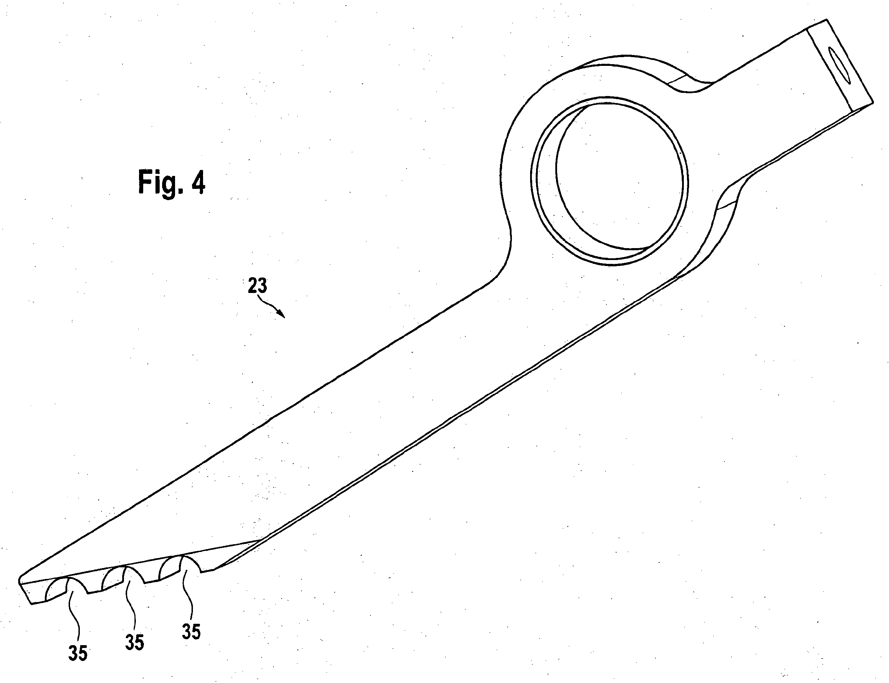

Die anderen überwiegend Kraftschluss herstellenden Produktfinger 23 sind im Detail in Figur 4 dargestellt. Diese Produktfinger 23 sind ohne den Haken 32 ausgebildet und verfügen auf der der Oberseite der Produktteile zugewandten Seite über eine einen Reibschluss unterstützende Oberflächenstruktur. Diese Oberflächenstruktur kann auf verschiedene Weise ausgebildet sein. Besonders bevorzugt sind mehrere Nuten 35 vorgesehen, die quer zur Querrichtung Q verlaufen. Diese Nuten 35 bilden eine griffige Oberflächenstruktur bzw. Kontaktfläche zwischen den Produktfingern 23 einerseits und den Produktteilen andererseits. Die Form bzw. Gestalt der Oberflächenstruktur, also im Ausführungsbeispiel der Nuten 35, ist insbesondere auch unter Hygieneaspekten gewählt. Das bedeutet, dass die Nuten 35 der Oberfläche eine grobe Struktur geben, die besonders einfach zu reinigen ist. Die Anzahl und Ausrichtung sowie Gestalt der Nuten 35 kann aber variiert werden. Die Nuten 35 können auch durch andere Strukturelemente, wie z.B. Dorne oder dergleichen ersetzt werden. Bezüglich der Länge der Produktfinger 23 können diese alle gleich lang ausgebildet sein. Vorzugsweise sind die Produktfinger 23 zur Herstellung des Kraftschlusses jedoch geringfügig kürzer ausgebildet als die Produktfinger 23 zur Herstellung des Formschlusses.

Wie weiter oben erwähnt, ist zusätzlich zum Transportelement 19 zum Zuführen und Transportieren der Produkte 11 ein weiteres Transportelement 21 vorgesehen, um die separierten Produktteile abzufördern. Die Transportelemente 19 und 21 sind vorzugsweise nebeneinander angeordnet und liegen etwa auf der gleichen Höhe. Anders ausgedrückt liegen die Transportelemente 19, 21 in derselben Transportebene E. Allerdings können die Transportelemente 19,21 auch höhenversetzt zueinander angeordnet sein. Die beiden Transportelemente 19, 21 sind vorzugsweise nahe beieinander angeordnet, so dass der Zwischenraum gering gehalten wird. Nicht zu vermeidende (aber auch bewusst gewählte) Zwischenräume können z.B. durch ein Zwischenblech 36 oder dergleichen überbrückt werden, wobei die Zwischenbleche 36 oder gleich wirkende Elemente die Querbewegung der Produktteile von dem Transportelement 19 auf das Transportelement 21 unterstützen bzw. zumindest nicht blockieren. Bezüglich der Antriebs- bzw. Transportrichtung T sind beide Transportelemente 19, 21 vorzugsweise in die gleiche Richtung angetrieben. Eine entgegen gesetzte Antriebsrichtung der beiden Transportelemente 19, 21 ist aber ebenfalls möglich.

Wie erwähnt ist die Erfindung nicht auf die beschriebene Ausführungsform beschränkt. So kann das Mittel 20 zum Querfördern auch an einer anderen Position, z.B. seitlich zum Transportelement 19 angeordnet sein. Bei der beschriebenen Vorrichtung 10 werden die Produkte 11, nämlich die Fischfilets, Schwanz voraus transportiert. Selbstverständlich ist auch ein Transport Kopf voraus möglich. Bei der Separierung anderer Produkte 11 bzw. Produktteile, wie z.B. Geflügel, Papierstapel oder dergleichen, sind aber auch ganz andere Positionierungen und Transportausrichtungen möglich. Die Vorrichtung 10 eignet sich selbstverständlich auch zum Separieren oder Sortieren von vollständigen Produkten 11 als Ganzes bzw. von Produktteilen, die auf andere Weise als Schneiden von einem Produkt 11 getrennt wurden.

Im Folgenden wird das Verfahrensprinzip anhand der Figuren näher beschrieben: Die Produkte 11 werden kontinuierlich auf dem Transportelement 19 durch die Vorrichtung 10 und dabei insbesondere unterhalb des Mittels 20 zum Querfördern entlang transportiert. Eine intermittierende Förderung ist aber auch grundsätzlich möglich. Die Produkte 11 liegen beim Zuführen an die Vorrichtung 10 zu mehreren Produktteilen geschnitten aber noch zusammen auf dem Transportelement 19. Wahlweise werden die Lage des Produktes 11 sowie produktspezifische Informationen erkannt bzw. erfasst oder von einer vorgeordneten Maschine, beispielsweise einer Maschine zum Schneiden der Produkte 11, übernommen. Um einzelne Produktteile zu separieren, also seitlich bzw. quer auszuschleusen bzw. vom Rest des Produkts 11 zu trennen, werden die Produktfinger 23 zunächst in die richtige Position oberhalb des Produkts 11 bewegt. Auf der Basis der produktspezifischen Daten und in Kenntnis der Lage des Produkts 11 auf dem Transportelement 19 werden die Produktfinger 23 durch Schwenken um die Achse A und/oder Achse C exakt positioniert, bevor sie aus einer Warteposition in eine Arbeitsposition um die Achse B nach unten geschwenkt werden. Dabei greifen die Produktfinger 23 in die Schnittfuge 24 ein und/oder liegen auf dem zu separierenden Produktteil auf. Sobald der Formschluss und/oder Kraftschluss zwischen den Produktfingern 23 und dem Produktteil hergestellt ist, schwenken die am Träger 27 angeordneten Produktfinger 23 mit dem Träger 27 mittels der Schwinge 28 um die Achse A, so dass die Produktteile in Querrichtung Q quer zur Transportrichtung T an die Seite des Transportelementes 19 oder auf das neben dem Transportelement 19 liegende weitere Transportelement 21 gezogen werden. Anschließend werden die Produktfinger 23 zurück in die Warteposition angehoben, so dass die Produktteile freigegeben werden. Die separierten Produktteile werden dann abgefördert.

Am Beispiel gemäß Figur 1 treten nur die in Transportrichtung T ersten drei Produktfinger 23, die die Hakenform aufweisen, in Eingriff mit der Schnittfuge 24, um den Loin-Abschnitt 12 zu separieren. Die weiteren drei, in Transportrichtung T hinteren Produktfinger 23 befinden sich in Warteposition und weisen einen Abstand zum Produkt 11 auf. Durch das Schwenken des Trägers 27 um die Achse A wird der Loin-Abschnitt 12 separiert. Zum Separieren des Long-Loin-Abschnitts 15 (siehe Figur 2) sind alle Produktfinger 23 in Arbeitsposition, also in Eingriff und in Anlage mit dem Produktteil. Durch Schwenken des Trägers 27 um die Achse A wird der Long-Loin-Abschnitt 15 separiert. Optional können die Produktfinger 23 bzw. kann der Träger 27 mindestens zum Ende der Querbewegung hin zusätzlich um eine vertikale Achse C geschwenkt werden, so dass unterschiedliche Massenträgheiten des Produktteils kompensiert werden und eine Ablage des Long-Loin-Abschnitts 15 parallel zur Transportrichtung T erreicht wird. Zusätzlich besteht die Möglichkeit, und zwar aufgrund der Möglichkeit der einzelnen Ansteuerung der Produktfinger 23, einzelne Produktfinger 23 bzw. die Produktfinger 23, die den Abschnitt des Produktteils mit der größeren Massenträgheit ziehen, zeitlich früher außer Eingriff bzw. außer Kontakt zu nehmen, als die Produktfinger 23, die den Abschnitt des Produktteils mit der geringeren Massenträgheit ziehen.

Im Übrigen können die Produktfinger 23 unabhängig voneinander, beispielsweise zur Anpassung an unterschiedliche Produktgrößen, betätigt werden. Die Kombination der in Eingriff bzw. in Anlage befindlichen Produktfinger 23 und die zeitliche Dauer des Eingriffs bzw. der Anlage sind beliebig wählbar.

## Patentansprüche

1. Vorrichtung (10) zum Separieren von Produktteilen geschnittener Produkte (11), insbesondere Fischfilets, umfassend ein Transportelement (19) zum Transportieren der geschnittenen und noch zusammen liegenden Produkte (11) in Transportrichtung T, Mittel (20) zum Querfördern von Produktteilen in Querrichtung Q quer zur Transportrichtung T sowie ein Transportelement (21) zum Abfördern der separierten Produktteile, **dadurch gekennzeichnet, dass** die Vorrichtung (10) des Weiteren Mittel zum Erkennen der Lage der Produkte (11) auf dem Transportelement (19) sowie zum Erfassen produktspezifischer Daten umfasst und dass das Mittel (20) zum Querfördern mindestens zwei Produktfinger (23) aufweist, die zum Eingriff in Schnittfugen (24) zwischen Produktteilen und zum Aufliegen auf Produktteilen ausgebildet und in Abhängigkeit der Lage der Produkte und der produktspezifischen Daten entsprechend zum Querfördern in Querrichtung Q steuerbar sind.

2. Vorrichtung nach Anspruch 1, **dadurch gekennzeichnet, dass** die Produktfinger (23) zum Ziehen der Produktteile in Querrichtung Q quer zur Transportrichtung T ausgebildet und eingerichtet sind.

3. Vorrichtung nach Anspruch 1 oder 2, **dadurch gekennzeichnet, dass** alle Produktfinger (23) federbelastet ausgebildet sind.

4. Vorrichtung nach einem der Ansprüche 1 bis 3, **dadurch gekennzeichnet, dass** alle Produktfinger (23) an einem gemeinsamen Träger (27) angeordnet und aus einer Warteposition in eine Arbeitsposition und umgekehrt bewegbar ausgebildet sind und der Träger (27) mindestens einen weiteren Freiheitsgrad zur Ausübung der Querbewegung in Querrichtung Q aufweist.

5. Vorrichtung nach Anspruch 4, **dadurch gekennzeichnet, dass** die Produktfnger (23) schwenkbar um eine Achse B am Träger (27) gelagert sind und der Träger (27) um eine Achse A, die oberhalb der Transportebene E der Produkte (11) liegt und in Richtung der Transportrichtung T verläuft, schwenkbar ist.

6. Vorrichtung nach Anspruch 4 oder 5, **dadurch gekennzeichnet, dass** der Träger (27) um eine Achse C, die vertikal zur Transportebene E der Produkte (11) verläuft, schwenkbar ist, derart, dass die am Träger (27) angeordneten Produktfinger (23) in Bezug auf die Transportrichtung T in unterschiedliche Winkelstellungen bringbar sind.

7. Vorrichtung nach Anspruch 5 oder 6, **dadurch gekennzeichnet, dass** den Produktfingern (23) Pneumatikzylinder (26) zur Ausübung der Schwenkbewegung um die Achse B aus der Warteposition in die Arbeitungsposition und umgekehrt zugeordnet sind.

8. Vorrichtung nach einem der Ansprüche 1 bis 7, **dadurch gekennzeichnet, dass** dem Träger (27) mindestens ein Pneumatikzylinder (30, 31), vorzugsweise jedoch zwei (Pneumatikzylinder (30, 31), zur Ausübung der Schwenkbewegung um die Achse C zur Schrägstellung der Produktfinger (23) zugeordnet ist bzw. sind.

9. Vorrichtung nach Anspruch 1 oder 2, **dadurch gekennzeichnet, dass** das Mittel (20) zum Querfördern sechs Produktfinger (23) umfasst, wobei die Produktfinger (23) mindestens gruppenweise, vorzugsweise jedoch alle einzeln ansteuerbar sind.

10. Vorrichtung nach einem der Ansprüche 1 bis 9, **dadurch gekennzeichnet, dass** mindestens ein Produktfinger (23) zur Herstellung eines Formschlusses mit dem Produkt (11) und mindestens ein Produktfinger (23) zur Herstellung eines Kraftschlusses mit dem Produkt (11) ausgebildet ist.

11. Vorrichtung nach Anspruch 10, **dadurch gekennzeichnet, dass** die Produktfinger (23) zur Herstellung eines Formschlusses mit dem Produkt (11) eine Hakenform zum Eingriff in die Schnittfugen (24) zwischen Produktteile aufweisen und/oder zur Herstellung eines Kraftschlusses mit dem Produkt (11) auf der dem Produkt (11) zugewandten Seite mindestens teilweise mit einer einen Reibschluss zum Produkt (11) herstellenden Oberfläche versehen sind.

12. Vorrichtung nach einem der Ansprüche 10 oder 11, **dadurch gekennzeichnet, dass** die Produktfinger (23) zur Herstellung eines Kraftschlusses mit dem Produkt (11) gegenüber den Produktfingern (23) zur Herstellung eines Formschlusses mit dem Produkt (11) kürzer ausgebildet sind.

13. Verfahren zum Separieren von Produktteilen geschnittener Produkte (11), insbesondere Fischfilets, insbesondere mit einer Vorrichtung (10) nach einem der Ansprüche 1 bis 12 **gekennzeichnet durch** die folgenden Schritte:
- Zuführen der geschnittenen und noch zusammen liegenden Produkte (11) in Transportrichtung T mittels eines Transportelementes (19),
- Erkennen der Lage der Produkte (11) auf dem Transportelement (19) und Erfassen produktspezifischer Daten,
- Querfördern von Produktteilen in Querrichtung Q quer zur Transportrichtung T, indem mindestens zwei Produktfinger (23) in Schnittfugen (24) zwischen Produktteilen eingreifen und auf Produktteilen aufliegen und in Abhängigkeit der Lage der Produkte (11) und der produktspezifischen Daten entsprechend zum Querfördern in Querrichtung Q gesteuert werden, und
- Abfördern der separierten Produktteile.

14. Verfahren nach Anspruch 13, **dadurch gekennzeichnet, dass** die Produktteile vom Transportelement (19) gezogen werden.

15. Verfahren nach Anspruch 13 oder 14, **dadurch gekennzeichnet, dass** die Produktfinger (23) während der Ziehbewegung um eine vertikale Achse C geschwenkt werden, wobei die Produktfinger (23) gruppenweise und vorzugsweise einzeln angesteuert werden.

## Claims

1. Apparatus (10) for separating product parts of cut products (11), in particular fish fillets, comprising a transport element (19) for transporting the cut products (11) still lying together in the transport direction T, means (20) for transversely conveying product parts in the transverse direction Q transversely to the transport direction T, and a transport element (21) for carrying away the separated product parts, **characterised in that** the apparatus (10) further comprises means for detecting the position of the products (11) on the transport element (19) and for capturing product-specific data and **in that** the means (20) for transverse conveying has at least two product fingers (23) which are designed to engage in cutting grooves (24) between product parts and to rest on product parts and can be controlled in accordance with the position of the products and the product-specific data accordingly for transverse conveying in the transverse direction Q.

2. Apparatus according to claim 1, **characterised in that** the product fingers (23) are constructed and designed to pull the product parts in the transverse direction Q transversely to the transport direction T.

3. Apparatus according to claim 1 or 2, **characterised in that** all of the product fingers (23) are spring-loaded.

4. Apparatus according to any one of claims 1 to 3, **characterised in that** all of the product fingers (23) are disposed on a common support (27) and designed to be movable out of a standby position into a work position and vice versa and the support (27) has at least one further degree of freedom for performing the transverse movement in the transverse direction Q.

5. Apparatus according to claim 4, **characterised in that** the product fingers (23) are mounted on the support (27) so as to be pivotable about an axis B and the support (27) is pivotable about an axis A which is located above the plane of transport E of the products (11) and runs in the transport direction T.

6. Apparatus according to claim 4 or 5, **characterised in that** the support (27) is pivotable about an axis C which runs vertically to the plane of transport E of the products (11), in such a way that the product fingers (23) disposed on the support (27) can be moved into different angular positions in relation to the transport direction T.

7. Apparatus according to claim 5 or 6, **characterised in that** associated with the product fingers (23) are pneumatic cylinders (26) for performing the pivot movement about the axis B out of the standby position into the work position and vice versa.

8. Apparatus according to any one of claims 1 to 7, **characterised in that** associated with the support (27) is at least one pneumatic cylinder (30, 31), but preferably two pneumatic cylinders (30, 31), for performing the pivot movement about the axis C for tilting the product fingers (23).

9. Apparatus according to claim 1 or 2, **characterised in that** the means (20) for transverse conveying comprises six product fingers (23), wherein the product fingers (23) can be controlled in groups, but preferably all individually.

10. Apparatus according to any one of claims 1 to 9, **characterised in that** at least one product finger (23) is designed to produce form-locking with the product (11) and at least one product finger (23) is designed to produce force-locking with the product (11).

11. Apparatus according to claim 10, **characterised in that** the product fingers (23) for producing form-locking with the product (11) have a hooked shape for engagement in the cutting grooves (24) between product parts and/or for producing force-locking with the product (11) are provided, on the side facing towards the product (11), at least partially with a surface which produces friction-locking with the product (11).

12. Apparatus according to any one of claims 10 or 11, **characterised in that** the product fingers (23) for producing force-locking with the product (11) are shorter than the product fingers (23) for producing form-locking with the product (11).

13. Method for separating product parts of cut products (11), in particular fish fillets, in particular with an apparatus (10) according to any one of claims 1 to 12, **characterised by** the following steps:
- delivery of the cut products (11) still lying together in the transport direction T by means of a transport element (19),
- detection of the position of the products (11) on the transport element (19) and capture of product-specific data,
- transverse conveying of product parts in the transverse direction Q transversely to the transport direction T, by the fact that at least two product fingers (23) engage in cutting grooves (24) between product parts and rest on product parts and are controlled in accordance with the position of the products (11) and the product-specific data accordingly for transverse conveying in the transverse direction Q, and
- currying away the separated product parts.

14. Method according to claim 13, **characterised in that** the product parts are pulled off the transport element (19).

15. Method according to claim 13 or 14, **characterised in that** the product fingers (23) are pivoted about a vertical axis C during the pulling movement, wherein the product fingers (23) are controlled in groups and preferably individually.

## Revendications

1. Dispositif (10) de séparation de morceaux de produits à partir de produits (11) coupés, notamment de filets de poisson, comportant un élément de transport (19) destiné au transport des produits (11) coupés et encore groupés dans une direction de transport T, un moyen (20) pour le transport transversal de morceaux de produits dans une direction transversale Q par rapport à la direction de transport T, ainsi qu'un élément de transport (21) destiné à l'évacuation des morceaux de produits séparés, **caractérisé en ce que** le dispositif (10) comporte en outre des moyens destinés à identifier la position des produits (11) sur l'élément de transport (19) et à acquérir des données spécifiques au produit, et **en ce que** le moyen (20) destiné au transport transversal présente au moins deux doigts de manutention (23) conçus pour s'engager dans des saignées (24) entre les morceaux de produits et reposer sur des morceaux de produits et qui peuvent, en fonction de la position des produits et des données spécifiques au produit, être commandés en conséquence pour le transport transversal dans la direction transversale Q.

2. Dispositif selon la revendication 1, **caractérisé en ce que** les doigts de manutention (23) sont conçus et agencés pour tirer les morceaux de produits dans la direction transversale Q par rapport à la direction de transport T.

3. Dispositif selon la revendication 1 ou 2, **caractérisé en ce que** tous les doigts de manutention (23) sont contraints par ressort.

4. Dispositif selon l'une des revendications 1 à 3, **caractérisé en ce que** tous les doigts de manutention (23) sont disposés au niveau d'un support (27) commun et sont conçus de façon à pouvoir se déplacer d'une position d'attente dans une position de travail et inversement, et **en ce que** le support (27) présente au moins un autre degré de liberté pour exécuter le mouvement transversal dans la direction transversale Q.

5. Dispositif selon la revendication 4, **caractérisé en ce que** les doigts de manutention (23) sont montés de façon à pivoter autour d'un axe B sur le support (27), et **en ce que** le support (27) est apte à pivoter autour d'un axe A situé au-dessus du plan de transport E des produits (11) et qui s'étend dans la direction de transport T.

6. Dispositif selon la revendication 4 ou 5, **caractérisé en ce que** le support (27) est apte à pivoter autour d'un axe C qui s'étend verticalement par rapport au plan de transport E des produits (11), de façon telle que les doigts de manutention (23) disposés sur le support (27) peuvent être amenés dans différentes positions angulaires par rapport à la direction de transport T.

7. Dispositif selon la revendication 5 ou 6, **caractérisé en ce que** des vérins pneumatiques (26) sont associés aux doigts de manutention (23) pour exécuter le mouvement de pivotement autour de l'axe B depuis la position d'attente dans la position de travail et inversement.

8. Dispositif selon l'une des revendications 1 à 7, **caractérisé en ce qu'**est/sont associé(s) au support (27) au moins un vérin pneumatique (30, 31), mais de préférence deux vérins pneumatiques (30, 31) pour exécuter le mouvement de pivotement autour de l'axe C vers la position oblique des doigts de manutention (23).

9. Dispositif selon la revendication 1 ou 2, **caractérisé en ce que** le moyen (20) pour le transport transversal comporte six doigts de manutention (23), les doigts de manutention (23) pouvant être commandés au moins par groupes, mais de préférence cependant individuellement.

10. Dispositif selon l'une des revendications 1 à 9, **caractérisé en ce qu'**au moins un doigt de manutention (23) est conçu pour réaliser une liaison par complémentarité de forme avec le produit (11) et au moins un doigt de manutention (23) est conçu pour réaliser une adhérence avec le produit (11).

11. Dispositif selon la revendication 10, **caractérisé en ce que** les doigts de manutention (23) destinés à réaliser une liaison par complémentarité de forme avec le produit (11) présentent une forme de crochet pour s'engager dans les saignées (24) entre les morceaux de produits, et/ou destinés à réaliser une adhérence avec le produit (11) sont pourvus, au moins partiellement, sur le côté orienté vers le produit (11), d'une surface créant une liaison par frottement avec le produit (11).

12. Dispositif selon l'une des revendications 10 ou 11, **caractérisé en ce que** les doigts de manutention (23) destinés à créer une adhérence avec le produit (11) sont plus courts que les doigts de manutention (23) destinés à créer une liaison par complémentarité de forme avec le produit (11).

13. Procédé destiné à séparer des morceaux de produits à partir de produits (11) coupés, en particulier de filets de poisson, en particulier au moyen d'un dispositif (10) selon l'une des revendications 1 à 12, **caractérisé en ce qu'**il comprend les étapes suivantes :
- amenée des produits (11) coupés et encore groupés dans la direction de transport T à l'aide d'un élément de transport (19),
- identification de la position des produits (11) sur l'élément de transport (19) et acquisition de données spécifiques au produit,
- transport transversal de morceaux de produits dans la direction transversale Q par rapport à la direction de transport T réalisé **en ce qu'**au moins deux doigts de manutention (23) s'engagent dans des saignées (24) entre les morceaux de produits et reposent sur des morceaux de produit et **en ce que**, en fonction de la position des produits (11) et des données spécifiques au produit, ils sont commandés en conséquence pour le transport transversal dans la direction transversale Q, et
- évacuation des morceaux de produits séparés.

14. Procédé selon la revendication 13, **caractérisé en ce que** les morceaux de produits sont tirés par l'élément de transport (19).

15. Procédé selon la revendication 13 ou 14, **caractérisé en ce que** les doigts de manutention (23) sont amenés à pivoter autour d'un axe vertical C pendant le mouvement de traction, les doigts de manutention (23) étant commandés par groupes, et de préférence individuellement.
